# EUROPEAN PATENT SPECIFICATION

(11) **EP 2 427 743 B1**
(45) Date of publication and mention of the grant of the patent: **28.11.2018**
(21) Application number: 10726153.9
(22) Date of filing: 06.05.2010
(51) Int. Cl.: G01F 23/00, G01F 23/296

(54) **VIBRATING ELEMENT APPARATUS**
VIBRATIONSELEMENTVORRICHTUNG
APPAREIL À ÉLÉMENT VIBRANT

(30) Priority: 07.05.2009 GB 0907846
(43) Date of publication of application: 14.03.2012
(73) Proprietor: Rosemount Measurement Limited, Slough Berkshire SL1 4UE (GB)
(72) Inventor: SMALLWOOD, Timothy John, Buckinghamshire HP11 1GE (GB)
(74) Representative: Vleck, Jan Montagu
(86) International application number: PCT/GB2010/000925
(87) International publication number: WO 2010/128308

(56) References cited:
- EP-A2- 1 624 291
- WO-A1-2006/092350
- US-A1- 2006 267 784

## Description

### Field of the Invention

This invention relates to vibrating element apparatus and, more particularly, to such apparatus when provided in the form of a vibrating fork level sensor.

### Background to the Invention

The principle of a vibrating fork level sensor is simple. A tuning fork is caused to vibrate at its resonant frequency by a piezoelectric crystal assembly and associated electronic circuit. As is well known, the resonant frequency changes depending on whether or not the fork is immersed in liquid. The frequency change is detected by the electronic circuit and the sensor output is switched. If the sensor is configured so that it indicates 'on' when not immersed, and 'off' when immersed, it is said to be normally dry. The 'Dry' frequency will generally be the maximum operating frequency attained by the instrument.

In some applications the sensor is used to determine a lower level and is thus normally immersed in the liquid. In this event the frequency change occurs when the fork becomes uncovered or exposed. However, as with the example described above, the change is detected and used to switch the sensor output. In this case, the immersed state will generally be 'on' while the uncovered state will generally be 'off'. Thus, in this configuration, the sensor is said to be normally wet. The 'Wet' frequency will generally be the minimum operating frequency attained by the sensor for a given liquid.

Sensors of this type have potential uses in safety critical applications. For example, as a high level tank alarm where failure of the sensor could lead to a hazardous overflow, or as a low level alarm where failure of the sensor could lead to a pump running dry and overheating. Because the failure of the sensor in such applications could cause a hazard, it is desirable to include some form of self-check.

A known form of self-check involves checking that the frequency generated by the fork/electronic circuit is within reference limits. These reference limits may be calculated from the Dry frequency of the particular tuning fork during calibration (to allow for manufacturing tolerances). As stated above the highest frequency occurs in air when the sensor is 'Dry'. This frequency falls when the fork is immersed in liquid. Frequency falls with increasing viscosity of the fluid in contact with the fork, the lowest frequency occurring when the liquid has a high viscosity.

Reference frequencies are set to be a little above the 'Dry' frequency ('Too Dry') and a little below the 'Wet' frequency ('Too Wet'). A fault signal is initiated when the frequency is above the 'Too Dry' frequency or below the 'Too Wet' frequency.

The self-checking method described above suffers from the disadvantage that, when the sensor is used in combination with highly viscous liquids, there is a complete loss of signal from the forks. The indicated frequency is zero which lies outside the reference limits. This would normally initiate a fault signal, however with this in mind, existing devices operate so that a zero frequency is treated as a special case and defined as a valid 'Wet' signal. However this, in turn, reduces the effectiveness of the fault detection process because the majority of common failure modes also result in a complete loss of signal and, in these cases, it is thus not possible to distinguish between a genuine fault and a 'Wet' signal in a highly viscous liquid.

Genuine faults or failure modes include: Internal conductor breakage or connection failure, disbonding or breakage of the piezo drive element(s), insufficient physical contact between the piezo drive elements and the fork, and aging of the piezo element(s) due to extended exposure to high temperatures.

It will be appreciated that the problem is exacerbated when the sensor is used as a low level alarm trigger. The standard self-check described above would, in this situation, treat a zero frequency due to a fault as indicating 'Wet' and would thus mask a 'Dry' low level alarm signal, giving rise to the possibility of a dangerous failure. This precludes the use of the method described in safety-critical low-level applications.

It is an object of preferred embodiments of the invention to provide a form of vibrating element apparatus which will address the problems set forth above; or which will at least provide a novel and useful alternative.

### Summary of the Invention

EP 1624291 discloses a vibrating element level switch. EP 1624291 discloses a 'test mode' in which measurements are taken and various parameters are determined and stored, and if they are extreme a fault is registered and the test is repeated. This is a single mode that can be activated manually or electronically when the operating frequency is high.

The present invention provides a vibrating element level switch as set out in claim 1.

The invention provides a vibrating element level switch having alternative self-checking modes; a user-operated facility to select one of said self-checking modes; and an indication operable to indicate the particular self-checking mode in operation.

Preferred features of the convention are set out in the dependent claims.

Many variations in the way the present invention can be performed will present themselves to those skilled in the art. The description which follows is intended as an illustration only of one means of performing the invention and the lack of description of variants or equivalents should not be regarded as
limiting.

### Brief Description of the Drawings

A working embodiment of vibrating element apparatus embodying the invention will now be described with reference to the accompanying drawings in which:
- Figure 1:: shows a general tank installation in which the level of the tank contents are monitored by apparatus according to the invention;
- Figure 2:: shows an enlarged isometric view of apparatus embodying the invention; and
- Figure 3:: shows a table summarizing the states and settings for apparatus according to the invention.

### Detailed Description of Working Embodiment

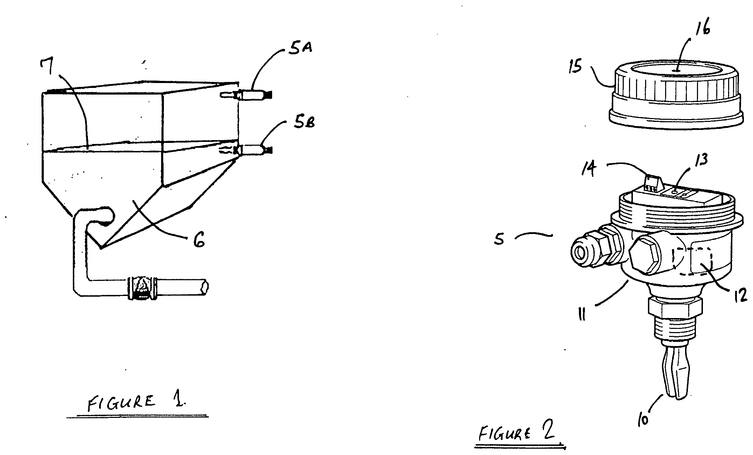

The present invention provides a vibrating element apparatus preferably in the form of a tuning fork level switch S. As is well known, switches S are mounted to provide a response to fluid levels reaching particular limits. Referring to Figure 1, a first switch SA may be mounted on tank 6 to respond when the fluid level 7 reaches a maximum level, whilst switch SB is mounted to respond when the fluid level reaches a minimum level.

In the particular case illustrated, the switch SA is preferably configured so that when the fork is uncovered ('Dry') the switch is 'On'. As the fork becomes immersed by the rising fluid level ('Wet'), the resonant vibration frequency is reduced. When the reduction in frequency falls below a threshold, this is sensed by the internal electronics of the switch and the switch then changes to an 'Off' state. The change in status to 'Off' may, for example, be used to switch off a pump supplying fluid to the tank 6.

The switch 5B will preferably be configured in the reverse manner to switch 5A, so that the switch is 'On' when the fork is immersed in the fluid ('Wet'). As the level of fluid falls below the fork of switch 5B ('Dry') the resonant frequency increases.

When the increase exceeds another threshold, this is sensed and triggers a change of status to 'Off'. This change of status to 'Off' can, for example, be used to switch off a pump withdrawing fluid from the tank 6.

As described above, switches 5 may be used in safety-critical situations. There is thus a need to include some form of self-check so that an alert is generated in the event of a switch malfunction or failure. Malfunctions or failures could, for example, arise due to conductor breakage or connector failure within the switch, disbonding or breakage of the piezo electric drive element(s), and aging of the piezo electric element(s) due to extended exposure to high temperatures. Failure could also arise through a lack of sufficient physical contact between the piezo electric element(s) and the fork due, for example, to a loosening of the clamping force applied to the piezo electric element(s). In all such cases malfunction will cause the frequency to fall to zero. As described above, this leads to a problem in that, in historical self-check methods, when a switch is configured so that 'Dry' is 'On', a zero frequency is treated as indicating contact with a highly viscous liquid, and not as a failure.

The present invention overcomes the problem by providing more than one, user-selectable, self-checking mode. The selectable modes may include the existing prior art checking mode, a new Standard Self Check Mode, and a new Enhanced Self Check mode, as described below.

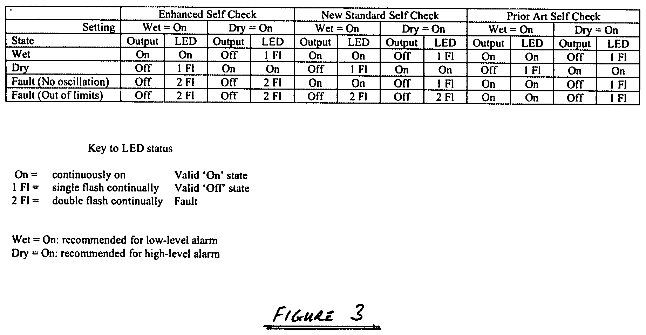

The existing prior art self-checking mode is as described above and its outputs are summarized in Figure 3.

In the Standard Self Check mode the self-check may be as above described with a zero frequency when 'Wet' being interpreted as indicating contact with a viscous fluid. In a second or Enhanced Self Check mode a zero frequency will be taken as an indication of failure.

Referring now to Figure 2, a tuning fork level switch embodying the invention comprises a fork assembly 10 projecting from a housing 11. Contained within the housing is a piezo electric crystal assembly of the known type which, when subjected to an oscillating electric potential causes the fork assembly 10 to vibrate. Also contained within the body 11, and indicated schematically in dotted outline by 12, is an electronics package which includes the driver electronics for the piezo electric assembly, and also electronics to determine and respond to frequency changes and, in turn, change the state of the switch 5.

Located on an upper part of the housing, and powered from the electronics 12, is an indicator LED 13. This LED 13 will, for example, produce a stream of single flashes or be lit continuously when the switch is in normal operation, and will produce a stream of double flashes when a fault is established as being present.

The switch preferably provides a visual indication of the particular self-checking mode selected. For example, in the prior art mode the LED may be programmed to flash green while, in the Standard mode, the LED may be programmed to flash red. In the Enhanced mode, the LED may, for example, be programmed to flash amber. In addition, or as an alternative, the electronics 12 may be configured and programmed to send a mode status signal and/or a fault signal via a communications circuit or network.

Selection of the particular operating mode is preferably by way of rotary switch 14. Switch 14 may also serve to select the 'normally dry' and 'normally wet' configurations.

Finally, the switch may further include a cover 15 which can be screw-fitted to the housing 11 to overlie and protect the switch 14, and deter interference with the switch. A hole 16 is provided in the cover which is aligned with the LED 13, when the cover 15 is in position, to allow the status of the LED to be viewed at all times.

A summary of the settings and outputs for the various modes is shown in Figure 3. Wet = On is recommended for low-level switches e.g. switch 5B in Figure 1, while Dry = On is recommended for high level switches e.g. switch 5A in Figure 1. It will be seen that, whilst the prior art checking mode provided that a zero frequency (Fault (No oscillation)) in Dry=On was treated as normal operation, the Enhanced Self-Check proposed herein, selected when there is little or no likelihood of use with highly viscous liquids, identifies a zero frequency as a malfunction.

It will thus be appreciated that the present invention, at least in the case of the embodiment described, provides a single form of tuning fork level switch which can not only indicate a wider range of faults over known devices, yet also allow the device to be quickly and easily adapted for use with viscous liquids whilst retaining malfunction indication.

## Claims

1. A vibrating element level switch (5) to provide a response to a fluid level reaching a particular limit, said switch being **characterised in that** it comprises alternative user-selectable self-checking modes comprising a standard self-checking mode to be selected when said switch is to be used with a highly viscous fluid and an enhanced self-checking mode to be selected when said switch is not to be used with a highly viscous fluid wherein, in the standard self-checking mode, said switch is configured to interpret a detected zero frequency when wet as indicating contact with a viscous fluid while, in the enhanced self-checking mode, said switch is configured to interpret a detected zero frequency when wet as indicating a fault; a user-operated switch device (14) to select one of said self-checking modes; and an indication (13) operable to indicate the particular self-checking mode in operation.

2. A vibrating element level switch (5) as claimed in claim 1 wherein said indication (13) is a visual indication.

## Patentansprüche

1. Vibrationselementpegelschalter (5) zum Bereitstellen einer Reaktion beim Erreichen einer bestimmten Grenze eines Fluidpegels, wobei der Schalter **dadurch gekennzeichnet ist, dass** er Folgendes umfasst: alternative benutzerwählbare Selbstprüfmodi, umfassend einen Standard-Selbstprüfmodus, welcher auszuwählen ist, wenn der Schalter mit einem hochviskosen Fluid verwendet werden soll, und einen erweiterten Selbstprüfmodus, welcher auszuwählen ist, wenn der Schalter nicht mit einem hochviskosen Fluid verwendet werden soll, wobei im Standard-Selbstprüfmodus der Schalter konfiguriert ist, um eine erfasste Null-Frequenz im nassen Zustand so zu interpretieren, dass diese einen Kontakt mit einem viskosen Fluid anzeigt, während im erweiterten Selbstprüfmodus der Schalter konfiguriert ist, um eine erfasste Null-Frequenz im nassen Zustand als eine Fehleranzeige zu interpretieren; eine benutzerbediente Schaltvorrichtung (14) zum Auswählen eines der Selbstprüfmodi und eine Anzeige (13), welche so betriebsfähig ist, dass sie den jeweils aktiven Selbstprüfmodus anzeigt.

2. Vibrationselementpegelschalter (5) nach Anspruch 1, wobei die Anzeige (13) eine visuelle Anzeige ist.

## Revendications

1. Commutateur (5) de niveau d'élément vibrant conçu pour donner une réponse à un niveau de fluide atteignant une limite particulière, ledit commutateur **se caractérisant en ce qu'**il comprend des modes alternatifs de contrôle automatique sélectionnables par l'utilisateur comprenant un mode de contrôle automatique standard à sélectionner quand ledit commutateur doit être utilisé avec un fluide à haute viscosité, et un mode de contrôle automatique amélioré à sélectionner quand ledit commutateur ne doit pas être utilisé avec un fluide à haute viscosité dans lequel, dans le mode de contrôle automatique standard, ledit commutateur est conçu pour interpréter une fréquence nulle détectée à l'état mouillé comme indiquant un défaut ; un dispositif de commutateur (14) activé par l'utilisateur servant à sélectionner un desdits modes de contrôle automatique ; et une indication (13) activable pour indiquer le mode particulier de contrôle automatique en cours de fonctionnement.

2. Commutateur (5) de niveau d'élément vibrant selon la revendication 1, dans lequel ladite indication (13) est une indication visuelle.
